# FASCICULE DE BREVET EUROPEEN

(11) **EP 4 558 430 B1**
(45) Date de publication et mention de la délivrance du brevet: **04.11.2026**
(21) Numéro de dépôt: 23750918.7
(22) Date de dépôt: 21.07.2023
(51) Int. Cl.: B65G 69/00, B60T 3/00

(54) **SYSTÈME D'IMMOBILISATION MANUEL D'UN VÉHICULE DEVANT UN QUAI DE TRANSBORDEMENT**
MANUELLES WEGFAHRSPERRSYSTEM FÜR EIN FAHRZEUG VOR EINER LADEBUCHT
MANUAL IMMOBILIZATION SYSTEM FOR A VEHICLE IN FRONT OF A LOADING BAY

(30) Priorité: 21.07.2022 FR 2207487
(43) Date de publication de la demande: 28.05.2025
(73) Titulaire: A.S.A Fermetures, 64230 Lescar (FR)
(72) Inventeur: BELLOTA, Ignacio, 64110 LAROIN (FR)
(74) Mandataire: Aquinov
(86) Numéro de dépôt international: PCT/EP2023/070262
(87) Numéro de publication internationale: WO 2024/018048

(56) Documents cités:
- EP-A1- 2 825 428
- EP-B1- 2 825 428
- WO-A1-2021/180437
- US-B2- 8 905 198

## Description

L'invention concerne le domaine du transit de marchandises entre un camion et un bâtiment. Plus précisément, l'invention concerne le domaine de la sécurité des quais de chargement ou de transbordement.

En amont d'une opération de transbordement d'un camion vers un quai de chargement/déchargement, il est essentiel de pouvoir immobiliser les véhicules devant les quais de chargement afin d'éviter tout accident lié à un éventuel démarrage intempestif du véhicule par exemple lors du passage d'un piéton ou lorsque le cariste effectue encore des chargements.

A ces fins, il est connu des systèmes d'immobilisation manuels comprenant un chariot monté coulissant sur un rail s'étendant le long de la zone de stationnement de sorte à pouvoir être déplacé manuellement par un opérateur au niveau d'un train de roues d'un véhicule à immobiliser. Le chariot est muni d'une cale pouvant prendre deux positions, une position de blocage et une position d'effacement. Lorsque le chariot est positionné au niveau du train de roues, l'opérateur déploie la cale vers sa position de blocage pour qu'elle soit positionnée contre le train de roues. Un mécanisme de verrouillage du chariot sur le rail permet alors d'assurer son immobilisation en translation et donc d'immobiliser le véhicule, via la cale.

Le brevet EP2825428 décrit un exemple d'un tel système d'immobilisation manuel. Dans ce système, le mécanisme de verrouillage est constitué d'un doigt de verrouillage porté par la cale et s'insérant dans un perçage formé dans le rail lorsque la cale est déplacée vers sa position de blocage. Si cette solution permet effectivement de verrouiller de façon efficace et simple le chariot sur le rail, elle présente toutefois un inconvénient important.

En effet, lorsque la cale est dans sa position de blocage, une roue du camion peut venir appuyer sur la cale, par exemple lorsque le chauffeur du camion avance ou encore lorsqu'il relâche une pédale de frein. Cette roue exerce alors une pression particulièrement importante sur la cale, qui est transmise au doigt de verrouillage, lequel vient alors se coincer contre un bord du perçage. Dans ce cas, afin de libérer la cale, il est nécessaire que l'opérateur exerce une traction particulièrement importante sur la poignée de la cale pour pouvoir dégager le doigt de verrouillage du perçage. Cette contrainte exige ainsi de l'opérateur une force conséquente et participe à l'accroissement de la pénibilité de son travail.

Le même inconvénient se retrouve dans l'ensemble des systèmes d'immobilisation manuels connus et qui emploient un mécanisme de verrouillage d'un chariot sur un rail pour l'immobiliser.

Il existe ainsi un besoin pour un système d'immobilisation manuel d'un véhicule routier sur une zone de stationnement d'un quai de transbordement, qui conserve la simplicité de manipulation des systèmes connus tout en permettant un dégagement facile de la cale lorsqu'une pression importante est exercée sur cette cale.

L'invention se place ainsi dans ce contexte, et vise ainsi répondre à ce besoin.

A ces fins, l'invention a pour objet un système d'immobilisation manuel d'un véhicule routier sur une zone de stationnement d'un quai de transbordement, comprenant :
a. un rail de guidage,
b. un chariot monté mobile en translation sur le rail de guidage ;
c. un dispositif d'immobilisation comprenant une cale montée mobile en translation sur le chariot selon une direction transversale au rail de guidage, et une poignée de manœuvre reliée à la cale, la cale étant apte à emprunter, sous l'effet d'une manipulation de la poignée de manœuvre, une configuration de blocage et une configuration dégagée ;

Dans l'invention, le rail de guidage comporte une pluralité d'éléments de verrouillage agencés le long du rail de guidage et la cale comporte au moins un organe de verrouillage complémentaire destiné à venir, par translation du chariot sur le rail de guidage, en vis-à-vis d'au moins l'un des éléments de verrouillage et la cale est agencée de sorte que, lorsqu'elle emprunte la configuration de blocage, l'organe de verrouillage complémentaire coopère avec ledit au moins un élément de verrouillage en vis-à-vis pour immobiliser le chariot sur le rail.

Le système est caractérisé en ce qu'il comporte une butée fixe vis-à-vis du dispositif d'immobilisation, en ce que la poignée de manœuvre est montée mobile sur la cale, et en ce que la poignée comporte au moins un organe de dégagement agencé pour venir au contact de la butée lorsque la poignée est manipulée pour déplacer la cale vers sa configuration dégagée.

L'invention propose ainsi de conserver le fonctionnement des systèmes d'immobilisation manuels connus, à savoir de déplacer manuellement le chariot sur le rail jusqu'au niveau d'un train de roues du véhicule à immobiliser, puis de déployer la cale vers sa position de blocage pour qu'elle soit positionnée contre le train de roues, le déplacement de la cale entrainant alors le déplacement de l'organe de verrouillage complémentaire vers l'élément de verrouillage en vis-à-vis, pour que cet organe et cet élément coopèrent mécaniquement et immobilise le chariot sur le rail. Par la suite, lorsque l'opérateur souhaite libérer le véhicule, il tire alors sur la poignée pour déplacer la cale vers sa configuration dégagée, c'est-à-dire en arrière. La poignée étant mobile vis-à-vis de la cale, par exemple en étant mobile en rotation vis-à-vis de la cale, elle se déplace de sorte que l'organe de dégagement vienne en appui contre la butée fixe, laquelle peut faire partie du rail ou du chariot. Lorsque l'opérateur continue à déplacer la poignée vis-à-vis de la cale, cette poignée exerce alors, par effet de levier, un effort, au niveau de sa liaison avec la cale, dirigé vers l'arrière et démultiplié au regard de la force appliquée par l'opérateur sur la poignée. Dès lors, en cas de coincement ou de blocage de l'organe de verrouillage complémentaire sur l'élément de verrouillage, ce levier permet ainsi, avec un effort minime, de dégager cet organe de verrouillage. L'opérateur peut ainsi continuer à tirer sur la poignée de sorte à entrainer un déplacement de la cale, qui est désormais libre, vers sa configuration dégagée.

Avantageusement, le système selon l'invention comporte un bâti formant un plan d'appui au sol, définissant la zone de stationnement et supportant le rail de guidage. Le cas échéant, le rail de guidage est un rail horizontal s'étendant le long de la zone de stationnement, sur tout ou partie de sa longueur. Le rail peut indifféremment être de section circulaire, semi-circulaire ou rectangulaire ou encore en H et peut s'étendre à distance du bâti en y étant fixée au moyen de pieds, étant entendu que d'autres formes du rail de guidage peuvent être envisagées sans sortir du cadre de la présente invention.

Selon un exemple de réalisation de l'invention, le chariot peut être monté coulissant sur le rail de guidage, le chariot étant par exemple équipé d'un ou plusieurs organes de guidage, comme des galets de roulement ou des patins, agencés pour glisser ou rouler sur une ou plusieurs surfaces, latérale, supérieure et/ou inférieure, du rail de guidage. Par exemple, les organes de guidage pourront être agencés au niveau d'une glissière du chariot engagée en coulissement sur le rail de guidage. Le cas échéant, le rail de guidage pourra comporter un guide s'étendant le long du rail de guidage sur une surface du rail de guidage, notamment une surface supérieure, et les organes de guidage pourront comporter une gorge dans laquelle est engagé le guide du rail de guidage. La section du guide pourra être de section circulaire ou rectangulaire. Selon un autre exemple de réalisation de l'invention, le chariot pourra comporter un fourreau de guidage engagé en coulissement sur le rail de guidage.

Avantageusement, chaque élément de verrouillage est formé par un perçage ou un orifice, borne ou traversant, vertical ou horizontal, formé dans le rail de guidage, ces perçages ou orifices étant notamment régulièrement espacés le long du rail. Le cas échéant, le ou chaque organe de verrouillage complémentaire pourra être un pion ou un doigt destiné à être inséré dans l'un de ces perçages ou orifices du rail de guidage. En variante, le rail de guidage pourra comporter une crémaillère agencée le long du rail de guidage, chaque élément de verrouillage étant formé par un cran de ladite crémaillère. En variante encore, le rail de guidage pourra comporter une chaine agencée le long du rail de guidage, chaque élément de verrouillage étant formé par un maillon de ladite chaine. Le cas échéant, le ou chaque organe de verrouillage complémentaire pourra comporter un pion ou une dent destinée à être engagée dans l'un des crans de la crémaillère ou dans l'un des maillons de la chaine.

Par exemple, la cale pourra comporter au moins deux organes complémentaires de verrouillage, ces organes étant agencés de façon adjacente et étant destinés à coopérer avec deux éléments de verrouillage adjacents lorsque la cale emprunte sa position de blocage. La distance séparant les deux organes complémentaires de verrouillage est ainsi sensiblement identique au pas séparant deux éléments de verrouillage adjacents. On améliore ainsi la résistance du système face à un départ intempestif d'un véhicule immobilisé. Dans une variante de réalisation, la cale pourra comporter au moins deux organes complémentaires de verrouillage, ces organes étant agencés de façon adjacente en étant séparés par une distance sensiblement inférieure au pas séparant deux éléments de verrouillage adjacents, par exemple en étant de l'ordre de la moitié de ce pas. Dans ce cas, seul l'un de ces organes complémentaires de verrouillage peut coopérer avec un élément de verrouillage, l'autre étant alors en butée contre le rail. Dans le cas d'un désalignement du chariot avec les éléments de verrouillage, on minimise ainsi le déplacement nécessaire du chariot pour que l'un de ces organes complémentaires de verrouillage coopère avec un élément de verrouillage, et on augmente ainsi la précision du positionnement.

De préférence, le chariot pourra comporter au moins un orifice, une fenêtre ou un dégagement, formé dans une de ses parois et agencé en vis-à-vis de l'organe complémentaire de verrouillage, de sorte que cet orifice, cette fenêtre ou ce dégagement vienne en alignement avec l'élément de verrouillage en vis-à-vis et que l'organe complémentaire de verrouillage le traverse pour atteindre l'élément de verrouillage en vis-à-vis. En variante, la cale pourra être agencée de sorte que l'organe complémentaire de verrouillage passe au-dessous, ou au-dessus, du chariot pour atteindre l'élément de verrouillage en vis-à-vis.

Selon un exemple de réalisation de l'invention, la cale peut être montée coulissante sur le chariot, le chariot et/ou la cale étant par exemple équipé d'un ou plusieurs organes de guidage, comme des galets de roulement ou des patins, agencés pour glisser ou rouler sur une ou plusieurs surfaces, latérale, supérieure ou inférieure, de la cale, respectivement du chariot. Par exemple, les organes de guidage pourront être agencés au niveau d'une glissière du chariot dans laquelle est engagée en coulissement la cale. Le cas échéant, la cale pourra comporter un guide s'étendant le long de la cale sur une surface de la cale, notamment une surface inférieure, et les organes de guidage pourront comporter une gorge dans laquelle est engagé le guide de la cale. La section du guide pourra être de section circulaire ou rectangulaire. Selon un autre exemple de réalisation de l'invention, le chariot pourra comporter un fourreau de guidage dans laquelle est engagée en coulissement la cale.

La cale est avantageusement pourvue d'une partie active prévue pour venir au contact de la bande de roulement d'une roue du véhicule à immobiliser. Par exemple, la cale ainsi que sa direction de translation vis-à-vis du chariot peuvent s'étendre dans une direction sensiblement perpendiculaire à une direction d'extension longitudinale du rail de guidage. Dans l'invention, on entend par « configuration de blocage de la cale », une configuration dans laquelle elle s'étend d'un côté du rail de guidage, à savoir le côté duquel s'étend la zone de stationnement, de sorte que sa partie active de cette cale soit positionnée pour venir au contact de la bande de roulement d'une roue du véhicule à immobiliser. On entend également par « configuration dégagée de la cale », une configuration de la cale dans laquelle sa partie active ne s'oppose plus à un mouvement de la roue, la cale s'étendant par exemple, partiellement ou totalement, d'un autre côté du rail de guidage.

Dans un mode de réalisation de l'invention, le chariot comporte ladite butée fixe. Le cas échéant, la poignée comporte un socle via lequel elle est montée pivotante sur la cale et l'organe de dégagement est agencé sur ce socle en-dessous de l'axe de rotation de la poignée sur la cale. Par exemple, la butée fixe pourra être agencée sur une paroi du chariot faisant face à la poignée, notamment la même paroi dans laquelle est formé ledit orifice, ladite fenêtre ou ledit dégagement destiné à être traversé par l'organe complémentaire de verrouillage, en étant notamment agencée au droit de cet orifice, cette fenêtre ou ce dégagement. On pourra prévoir que la butée soit un fer soudé à ladite paroi du chariot.

Avantageusement, le chariot pourra comporter une pluralité de butées fixes, notamment deux butées fixes disposées de part et d'autre dudit orifice, de ladite fenêtre ou dudit dégagement, et la poignée comporte une pluralité d'organes de dégagement chacun agencé pour venir au contact de l'une des butées.

En variante, le rail pourra comporter ladite butée fixe. Le cas échéant, le rail pourra comporter une pluralité de butées fixes réparties le long du rail, notamment en étant alternées avec les éléments de verrouillage.

Dans un mode de réalisation de l'invention, la cale comporte une tige pourvue, à son extrémité arrière, d'une platine sur laquelle est monté l'organe de verrouillage complémentaire, le socle de la poignée étant montée pivotant sur cette platine.

De préférence, ladite platine s'étend verticalement, vers le bas depuis l'extrémité arrière de la tige, le long d'une paroi du chariot faisant face à la poignée. Le cas échéant, l'organe de verrouillage complémentaire s'étend au niveau d'une zone inférieure de la platine, située en dessous de l'axe de rotation du socle de la poignée sur la platine. Par exemple, l'organe de verrouillage complémentaire peut s'étendre vers l'avant depuis une surface avant de ladite platine faisant face au chariot.

Par exemple, le socle comprend un arbre monté dans un cylindre solidaire d'une paroi avant de la platine pour définir l'axe de rotation de la poignée, le socle définissant un passage à l'arrière dudit arbre qui est traversé par la platine.

Avantageusement, la poignée et/ou la platine comporte un organe de blocage agencé pour venir au contact d'une partie de la cale lorsque la poignée est manipulée pour déplacer la cale vers sa configuration dégagée. Grâce à cette caractéristique, une fois l'organe de verrouillage complémentaire dégagé par l'effet de levier de la poignée, le mouvement relatif de la poignée vis-à-vis de la cale est ensuite stoppé par ce contact entre l'organe de blocage et la platine, de sorte que la poursuite de la manipulation de la poignée par l'opérateur entraine automatique un déplacement de la cale en arrière, vers la configuration dégagée.

Dans un exemple de réalisation de l'invention, le socle peut comporter l'organe de blocage, lequel peut être agencé à l'arrière d'une partie inférieure de la platine pour venir au contact de cette partie inférieure lorsque la poignée est manipulée pour déplacer la cale vers sa configuration dégagée. Le cas échéant, l'organe de verrouillage complémentaire peut s'étendre à l'avant de ladite partie inférieure de la platine.

Par exemple, le socle de la poignée peut comporter deux parois latérales reliées l'une à l'autre par ledit arbre, ladite platine s'étendant entre ces deux parois latérales en arrière de cet arbre. La poignée peut comporter une barre de manipulation s'étendant depuis le socle, en arrière de la platine. De préférence, l'organe de blocage peut être formé par une tige reliant lesdits parois latérales. On pourra par exemple prévoir que l'organe de dégagement comporte un cylindre agencé sur une surface intérieure de l'un des parois latérales.

Dans un autre exemple de réalisation de l'invention, la platine pourra être montée sur la tige de la cale au moyen d'au moins une vis agencée dans un trou oblong de la tige, ladite vis formant ledit organe de blocage. Dans cet exemple, lors du mouvement de la poignée destiné à dégager l'organe de verrouillage complémentaire, la platine est entrainée par la poignée et recule légèrement, sans que le reste de la cale ne se déplace, du fait du trou oblong. La vis est alors entrainée par ce recul de la platine et se déplace dans le trou oblong jusqu'à venir en butée contre un bord de ce trou oblong. Une fois l'organe de verrouillage complémentaire dégagé par l'effet de levier de la poignée, le mouvement relatif de la poignée vis-à-vis du reste de la cale est ensuite stoppé par ce contact entre la vis et le bord du trou oblong, de sorte que la poursuite de la manipulation de la poignée par l'opérateur entraine automatique un déplacement de la cale en arrière, vers la configuration dégagée. Il est ainsi possible d'avoir un premier point de traction de la poignée sur la cale situé au niveau de l'organe de verrouillage complémentaire, ce qui permet d'obtenir un effet de levier particulièrement important, suivi d'un deuxième point de traction situé au niveau de la tige de la cale, ce qui permet de faciliter le déplacement de la cale.

Dans encore un autre exemple de réalisation de l'invention, l'organe de blocage comporte au moins une pièce de liaison montée pivotante sur la poignée, notamment au niveau de la tige de la cale, ladite pièce de liaison comportant un trou oblong dans lequel est agencé un axe solidaire de la cale, notamment de la tige. Le cas échéant, la platine pourra être montée fixe sur la tige de la cale. Dans cet exemple, lors du mouvement de la poignée destiné à dégager l'organe de verrouillage complémentaire, la platine est entrainée par la poignée et recule légèrement, ce qui entraine également le recul du reste de la cale. L'axe solidaire de la tige est alors entrainé par ce recul de la cale et se déplace dans le trou oblong de la pièce de liaison jusqu'à venir en butée contre un bord de ce trou oblong, tandis que la pièce de liaison reste sensiblement en position. Une fois l'organe de verrouillage complémentaire dégagé par l'effet de levier de la poignée, le contact entre l'axe solidaire de la tige et le bord du trou oblong de la pièce de liaison entraine un changement du point de traction de la tige par la poignée, de sorte que la poursuite de la manipulation de la poignée par l'opérateur entraine automatique un déplacement de la cale en arrière, vers la configuration dégagée.

Avantageusement, l'organe de verrouillage complémentaire comporte un doigt de verrouillage monté sur un ressort. Le cas échéant, ledit ressort être un ressort de compression solidaire du doigt de verrouillage et en appui sur une surface avant de la platine de la cale, ou inversement. En d'autres termes, au repos, le doigt de verrouillage est déployé. Or, en cas d'alignement imparfait entre le doigt de verrouillage et l'élément de verrouillage en vis-à-vis, le doigt de verrouillage vient en appui contre le rail au droit de cet élément de verrouillage en vis-à-vis, entrainant alors une compression du ressort. Dès lors, cette compression du ressort permet, par exemple avec une faible poussée latérale sur la poignée, d'entrainer un réalignement automatique du chariot pour que le doigt de verrouillage se déploie, via une détente du ressort, et vienne coopérer avec l'élément de verrouillage en vis-à-vis.

Dans un mode de réalisation de l'invention, la section de la cale, et notamment de sa tige, est asymétrique. On pourra par exemple prévoir que la partie active de la tige, prévue pour venir au contact de la bande de roulement d'une roue du véhicule à immobiliser, présente une pente différente de la partie opposée de la tige, cette pente pouvant notamment être fonction d'une poussée moyenne exercée par une roue d'un véhicule. En variante, la section de la cale pourra être rectangulaire ou carrée ou ronde ou demi-circulaire.

De préférence, la cale comporte une tige pourvue à son extrémité avant, d'une jambe de force. Par exemple, ladite jambe de force comporte une semelle de glissement destinée à venir au contact avec le sol de la zone de stationnement, cette semelle de glissement s'étendant par exemple parallèlement au rail de guidage.

Dans un mode de réalisation de l'invention, le système comporte un système d'amortissement et de rappel comprenant un organe d'appui monté mobile sur le chariot via un dispositif amortisseur, l'organe d'appui étant apte à emprunter une position au repos dans laquelle il est en appui sur la cale en exerçant une force sur la cale orientée vers la zone de stationnement, et le dispositif d'amortissement est agencé pour rappeler l'organe d'appui vers sa position au repos. De préférence, la cale est montée sur le chariot de sorte qu'elle présente au moins un degré de liberté en rotation, vis-à-vis du chariot, selon un axe parallèle à la direction d'extension du rail de guidage. Il a été constaté que la roue du camion peut exercer une pression sur la cale particulièrement importante. Il est alors essentiel de permettre à la cale de se déplacer, sous l'effort exercé par la roue, pour éviter que cet effort ne soit repris par le chariot ou par le rail de guidage, ce qui pourrait entrainer une détérioration du système. Pour autant, ce déplacement peut entrainer une rotation de la cale autour d'un de ses points d'appui sur le chariot, et il est alors nécessaire de pouvoir la ramener dans sa position d'équilibre sur ces points d'appui. Le système d'amortissement permet ainsi d'autoriser un déplacement souple de la cale puis de la ramener dans sa position d'équilibre sur le chariot.

Avantageusement, la tige de la cale comporte une base plate à partir de laquelle s'étend la partie active, et l'organe d'appui comporte un galet de roulement en appui sur cette base plate au niveau de cette partie active. On pourra remplacer le galet de roulement par un autre type d'organe d'appui, comme un patin, sans sortir du cadre de la présente invention. De préférence, le chariot comporte un deuxième organe d'appui, notamment un deuxième galet de roulement, en appui sur ladite base plate, à l'opposé de ladite partie active.

Avantageusement, le dispositif amortisseur comporte une manivelle montée mobile en rotation sur le chariot, l'organe d'appui est relié à une première extrémité de la manivelle et la deuxième extrémité de la manivelle est reliée, via un ressort, au chariot. Le ressort peut par exemple être un ressort à gaz, comprenant par exemple un vérin dont le cylindre est monté mobile en rotation sur le chariot et dont la tige est reliée à la deuxième extrémité de la manivelle.

Avantageusement toujours, le chariot comporte au moins un galet de roulement avant et un galet de roulement arrière sur lesquels est disposée la cale et la manivelle est montée mobile en rotation sur le chariot au niveau de l'axe de rotation du galet de roulement avant. La cale est ainsi guidée en translation sur le chariot au moyen des galets de roulement avant et arrière. Lorsque la roue du camion exerce une pression importante sur la cale, la cale peut pivoter autour d'un axe de rotation passant au niveau du galet de roulement avant, l'arrière de la cale s'élevant vis-à-vis du galet de roulement arrière. Le positionnement de la manivelle permet ainsi de replaquer l'arrière de la cale sur ce galet de roulement arrière.

Dans un autre mode de réalisation de l'invention, dans lequel la cale est montée coulissante sur le chariot et dans lequel le chariot est équipé d'un ou plusieurs organes de guidage de la cale, au moins l'un desdits organes de guidage comporte un système d'amortissement et de rappel. Par exemple, ledit organe de guidage pourra être un galet de roulement monté sur le chariot via au moins un ressort de compression.

Dans un mode de réalisation de l'invention, le système comporte un dispositif de rappel de la poignée de manœuvre vers une position de repos opposée à la position de manipulation de la poignée de manœuvre permettant de déplacer la cale vers sa configuration dégagée. On pourra par exemple prévoir que le dispositif de rappel comporte un ressort reliant la poignée au chariot ou à la cale, le ressort étant agencé pour exercer un effort sur la poignée dirigée vers le chariot. Par exemple, le ressort pourra être fixé d'une part à la liaison pivot reliant la poignée à la pièce de liaison formant un organe de blocage et d'autre part à l'axe agencé dans le trou oblong de cette pièce de liaison. Ce dispositif de rappel permet ainsi de rappeler la poignée de manœuvre contre le chariot une fois que la cale a atteint sa position dégagée, de sorte à diminuer l'encombrement de l'ensemble.

Dans un mode de réalisation de l'invention, le système comporte un dispositif électromécanique de verrouillage de la cale dans sa configuration de blocage. Ce dispositif électromécanique permet ainsi d'éviter qu'un opérateur ou que le chauffeur d'un véhicule immobilisé ne déplace manuelle la cale vers sa configuration dégagée alors que le véhicule doit rester immobilisé, ce qui pourrait présenter un risque pour les autres opérateurs.

Avantageusement, le dispositif électromécanique de verrouillage comporte un électroaimant porté par le chariot, la cale comportant au moins une portion métallique destinée à venir en vis-à-vis de l'électroaimant lorsqu'elle emprunte sa configuration de blocage. Le cas échéant, le système peut comporter une unité de contrôle de l'électroaimant agencée pour contrôler l'électroaimant en fonction de la configuration empruntée par la cale, notamment lorsqu'un détecteur du système de blocage détecte que la cale emprunte sa configuration de blocage.

Par exemple, la cale peut être réalisée en métal et peut comporter un orifice, traversant ou borgne, de section circulaire ou oblongue, et notamment ménagé dans la base plate de la cale ou en variante dans une paroi de la tige de la cale, l'orifice étant destiné à recevoir une pièce, de profil identique, déployée par l'électroaimant lorsqu'il est activé par l'unité de contrôle. En variante, on pourra prévoir que ladite pièce soit montée sur un ressort, de sorte que sa configuration au repos soit une configuration déployée sous l'effet de la détente de ce ressort, et que l'activation de l'électroaimant par l'unité de contrôle entraine un escamotage de cette pièce et une compression du ressort.

On pourra concevoir de remplacer l'électroaimant par un moteur, notamment un moteur linéaire, lequel présente comme avantage de pouvoir développer une plus grande puissance et ainsi de déverrouiller plus facilement la cale, même en cas de coincement.

De préférence, la cale peut comporter un premier élément de détection réalisé fixe sur la cale et le chariot peut comporter au moins un premier détecteur apte à détecter la présence dudit élément de détection. De préférence, le premier élément de détection peut être agencé sur la cale de sorte qu'il soit positionné en vis-à-vis du premier détecteur lorsque la cale emprunte sa configuration de blocage. Cette combinaison permet ainsi de détecter si la cale emprunte ou non sa configuration de blocage. Par exemple, le premier détecteur peut comporter un capteur photoélectrique, par exemple muni d'une source de lumière rouge ou d'une source laser. un capteur de champ magnétique ou encore un capteur inductif. Le cas échéant, l'élément de détection peut comporter un aimant monté sur la cale, une cale métallique faisant saillie de la cale ou un orifice ménagé dans la cale. On pourra prévoir que la cale comporte plusieurs éléments de détection et/ou que le chariot comporte plusieurs détecteurs afin de réaliser des détections de différentes configurations de la cale ou des cinématiques plus complexe de la cale.

De façon alternative ou cumulative, le chariot pourra comporter un détecteur de présence d'une roue d'un véhicule positionnée au niveau du chariot, comme une cellule de détection optique agencée sur le chariot en arrière de la cale. Le cas échéant, ledit détecteur pourra être agencé pour déterminer la distance entre la roue détectée et la cale.

Dans un mode de réalisation de l'invention, le système comporte un câble d'alimentation reliant le dispositif électromécanique de verrouillage à une unité de contrôle. Le cas échéant, le câble comporte une première section s'étendant à partir de l'unité de contrôle dans le rail de guidage jusqu'à une extrémité ouverte du rail, et une deuxième section s'étendant à l'extérieur du rail de guidage depuis ladite extrémité ouverte jusqu'au dispositif électromécanique de verrouillage, et le câble passe par une poulie agencée au niveau de ladite extrémité ouverte. L'unité de contrôle pourra par exemple être agencée à distance du rail de guidage, notamment dans une armoire électrique prévue au niveau du quai de transbordement. Ces caractéristiques permettent d'éviter que le câble ne traine au sol et vienne gêner les opérations de transbordement, de manipulation du chariot, et de circulation des véhicules. De façon alternative ou cumulative, on pourra prévoir que le câble d'alimentation relie l'unité de contrôle à un autre type de dispositif électrique ou électronique porté par le chariot, comme un détecteur, une carte de circuit imprimé ou un module de signalisation sonore ou lumineuse. On pourra encore prévoir que le câble s'étende totalement en dehors du rail de guidage.

Avantageusement, la première section du câble pourra être une section spiralée. En variante, le câble pourra être monté sur un enrouleur à rappel automatique prévu à l'autre extrémité du rail de guidage. En variante encore, la première section du câble pourra être montée sur une chaîne de guidage agencée dans le rail de guidage.

Dans encore un autre exemple de réalisation de l'invention, le système comporte un câble d'alimentation reliant le dispositif électromécanique de verrouillage à une unité de contrôle dont une première section est montée sur une chaîne de guidage agencée parallèlement au rail de guidage, à l'extérieur de celui-ci.

L'invention a également pour objet un système d'immobilisation manuel d'un véhicule routier sur une zone de stationnement d'un quai de transbordement, comprenant :
a. un rail de guidage,
b. un chariot monté mobile en translation sur le rail de guidage ;
c. un dispositif d'immobilisation comprenant une cale montée mobile en translation sur le chariot selon une direction transversale au rail de guidage, et une poignée de manœuvre reliée à la cale, la cale étant apte à emprunter, sous l'effet d'une manipulation de la poignée de manœuvre, une configuration de blocage et une configuration dégagée ;
le rail de guidage comportant une pluralité d'éléments de verrouillage agencés le long du rail de guidage et la cale comportant au moins un organe de verrouillage complémentaire destiné à venir, par translation du chariot sur le rail de guidage, en vis-à-vis d'au moins l'un des éléments de verrouillage ; la cale étant agencée de sorte que, lorsqu'elle emprunte la configuration de blocage, l'organe de verrouillage complémentaire coopère avec ledit au moins un élément de verrouillage en vis-à-vis pour immobiliser le chariot sur le rail ; le système étant caractérisé en ce que l'organe de verrouillage complémentaire comporte un doigt de verrouillage monté sur un ressort.

L'invention a également pour objet un système d'immobilisation manuel d'un véhicule routier sur une zone de stationnement d'un quai de transbordement, comprenant :
a. un rail de guidage,
b. un chariot monté mobile en translation sur le rail de guidage ;
c. un dispositif d'immobilisation comprenant une cale montée mobile en translation sur le chariot selon une direction transversale au rail de guidage, et une poignée de manœuvre reliée à la cale, la cale étant apte à emprunter, sous l'effet d'une manipulation de la poignée de manœuvre, une configuration de blocage et une configuration dégagée ;
le rail de guidage comportant une pluralité d'éléments de verrouillage agencés le long du rail de guidage et la cale comportant au moins un organe de verrouillage complémentaire destiné à venir, par translation du chariot sur le rail de guidage, en vis-à-vis d'au moins l'un des éléments de verrouillage ; la cale étant agencée de sorte que, lorsqu'elle emprunte la configuration de blocage, l'organe de verrouillage complémentaire coopère avec ledit au moins un élément de verrouillage en vis-à-vis pour immobiliser le chariot sur le rail ; le système étant caractérisé en ce qu'il comporte un dispositif de rappel de la poignée de manœuvre vers une position de repos opposée à la position de manipulation de la poignée de manœuvre permettant de déplacer la cale vers sa configuration dégagée.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, une vue de dessus d'un système d'immobilisation d'un véhicule devant un quai de chargement selon un mode de réalisation de l'invention ;
[Fig. 2] représente, schématiquement et partiellement, une vue en perspective du système d'immobilisation de la [Fig. 1] ;
[Fig. 3] représente, schématiquement et partiellement, une vue en perspective d'un chariot du système d'immobilisation de la [Fig. 1] ;
[Fig. 4] représente, schématiquement et partiellement, une vue en perspective d'une cale du système d'immobilisation de la [Fig. 1] ;
[Fig. 5] représente, schématiquement et partiellement, une vue en perspective d'une poignée du système d'immobilisation de la [Fig. 1] ;
[Fig. 6] représente, schématiquement et partiellement, une vue en perspective de l'assemblage de la poignée de la [Fig. 5] avec la cale de la [Fig. 4] ;
[Fig. 7A] à [Fig. 7C] représentent, schématiquement et partiellement, des vues de côté du système de d'immobilisation de la [Fig. 1] à différents instants d'un déplacement de la cale ;
[Fig. 8] représente, schématiquement et partiellement, une vue de face du système d'immobilisation de la [Fig. 1] ;
[Fig. 9] représente, schématiquement et partiellement, une vue de côté du système d'immobilisation de la [Fig. 1] ;
[Fig. 10] représente, schématiquement et partiellement, une vue en perspective d'un système d'immobilisation selon un autre mode de réalisation de l'invention;

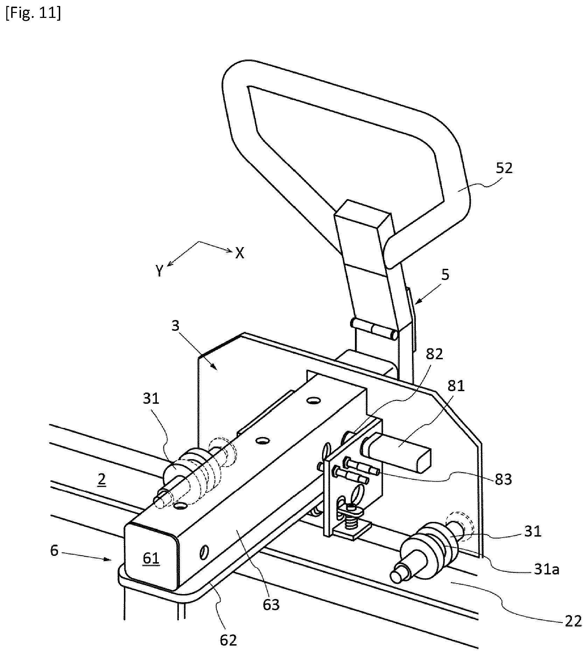

[Fig. 11] représente, schématiquement et partiellement, une autre vue en perspective du système d'immobilisation de la [Fig. 10];
[Fig. 12] représente, schématiquement et partiellement, une autre vue en perspective du système d'immobilisation de la [Fig. 10]; et
[Fig. 13A] à [Fig. 13C] représentent, schématiquement et partiellement, des vues de côté du système de d'immobilisation de la [Fig. 10] à différents instants d'un déplacement de la cale.

Dans la description qui suit, les éléments identiques, par structure ou par fonction, apparaissant sur différentes figures conservent, sauf précision contraire, les mêmes références. En outre, les termes « avant », « arrière », lorsqu'ils sont employés pour décrire le chariot, doivent être interprétés dans le contexte de l'orientation du quai de chargement tel qu'il a été représenté, correspondant à l'orientation des déplacements d'un camion par rapport au quai, le camion se dirigeant vers l'avant pour quitter le quai, et reculant vers l'arrière pour aborder le quai. En revanche, les termes « avant », « arrière », lorsqu'ils sont employés pour décrire la cale, doivent être interprétés dans le contexte de l'orientation des déplacements de la cale, la cale se dirigeant vers l'arrière vers sa configuration dégagée, et vers l'avant vers sa configuration de blocage.

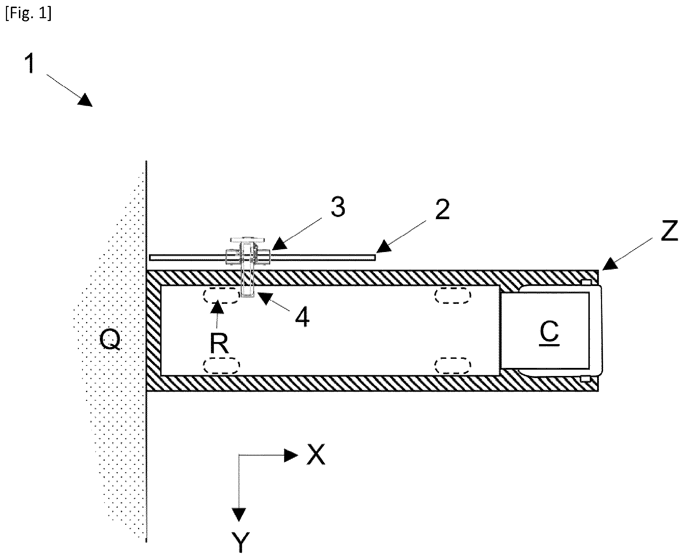

On a décrit en [Fig. 1] une vue de dessus d'un quai de chargement Q et de sa zone de stationnement Z, ainsi que d'un système d'immobilisation manuel 1 d'un véhicule C sur la zone de stationnement Z.

Dans la [Fig. 1], le véhicule C destiné à être immobilisé doit circuler à gauche du système 1 en reculant vers l'extrémité la plus éloignée du système 1, de sorte à positionner sa remorque au niveau du quai de chargement Q.

Le système d'immobilisation 1 comporte un rail de guidage 2, supporté par la zone de stationnement Z sur lequel circule le véhicule C, ainsi qu'un chariot 3 monté mobile en translation sur le rail 2 et équipé d'un dispositif d'immobilisation 4.

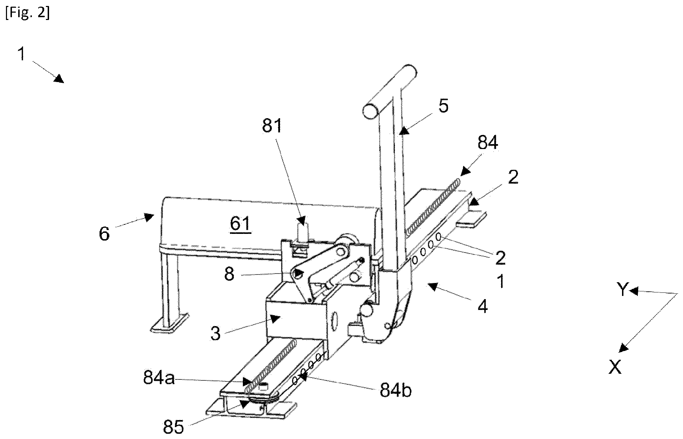

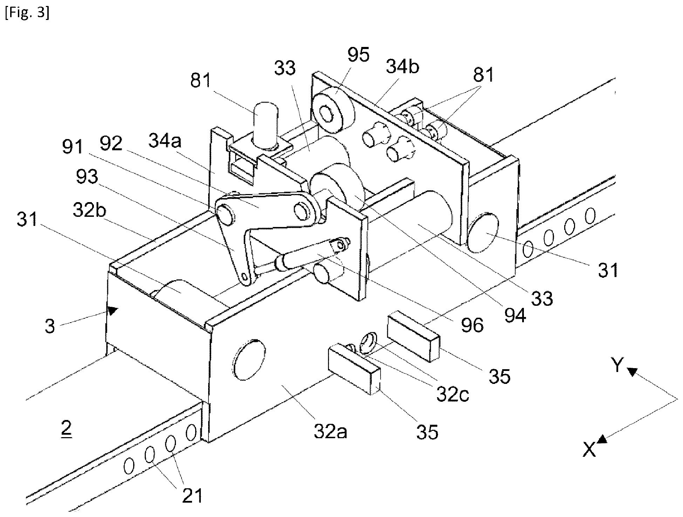

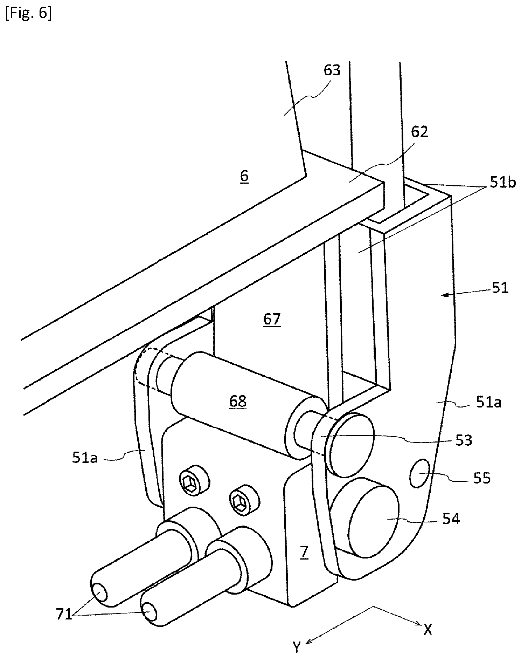

La description du système d'immobilisation 1 qui va suivre fait référence à la [Fig. 1] ainsi qu'à la [Fig. 2] qui représente une vue en perspective du système 1, et aux [Fig. 3] à [Fig. 6] qui représentent respectivement des vues en perspective du chariot 3 seul, d'une cale 6 du dispositif d'immobilisation, d'une poignée 5 du dispositif d'immobilisation, et de l'assemblage de la poignée 5 sur la cale 6.

Dans l'exemple décrit, le rail de guidage 2 comporte une pièce rectiligne horizontale creuse s'étendant selon un axe X le long de la zone de stationnement Z et présentant sur tout son long une section tubulaire. On pourra prévoir que la section du rail soit de forme différente, par exemple circulaire, semi-circulaire ou en H sans sortir du cadre de la présente invention.

Le rail de guidage 2 comporte une pluralité d'éléments de verrouillage 21 agencés le long du rail de guidage. Dans l'exemple décrit, chaque élément de verrouillage 21 est formé par un perçage vertical formé dans le rail de guidage, ces perçages 21 étant régulièrement espacés le long du rail 2.

Le chariot 3 est monté coulissant sur le rail de guidage 2. A cet effet, comme montré en [Fig. 3], le chariot 3 forme une glissière engagée en coulissement sur le rail 2 et est équipé de deux galets de roulement 31, avant et arrière, agencé à l'intérieur du chariot 3, ces galets 31 étant en appui sur une surface supérieure du rail 2. Le chariot 3 présente ainsi deux parois latérales 32a et 32b s'étendant de part et d'autre du rail 2 et dans lesquelles sont montés les axes de rotation des galets 31. De nouveau, on pourra prévoir d'autres modes de réalisation du chariot et/ou du rail permettant un guidage en translation du chariot sur le rail, par exemple employant des patins ou un fourreau de guidage ou encore de faire modifier les surfaces d'appui du chariot sur le rail, sans sortir du cadre de la présente invention.

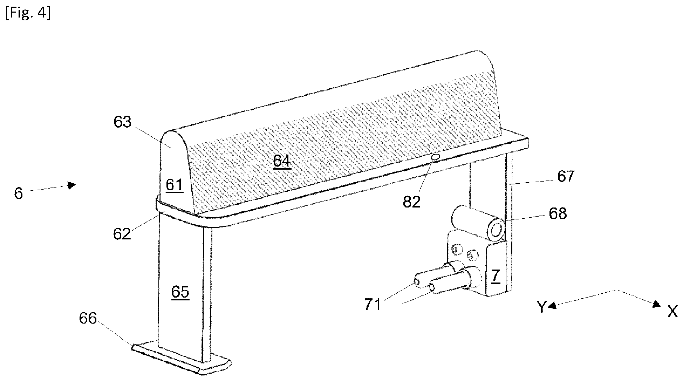

Le dispositif d'immobilisation comporte une cale 6, visible en [Fig. 4], montée mobile en translation sur le chariot 3 selon une direction Y transversale au rail de guidage.

La cale 6 comporte une tige 61, équipée d'une base plate 62 à partir de laquelle s'étend une pièce 63 pourvue d'une partie active 64 destinée à venir au contact de la bande de roulement d'une roue R du véhicule C à immobiliser. La tige 61 s'étend ainsi selon la direction Y.

Afin de guider la translation de la tige 61 vis-à-vis du chariot 3, le chariot 3 est équipé de deux autres galets de roulement 33 dont les axes de rotation, s'étendant selon la direction X, sont montés sur des parois avant 34a et arrière 34b d'une partie supérieure du chariot 3 montée sur la glissière du chariot 3. La base plate 62 vient ainsi en appui sur ces galets 33. On pourra prévoir d'autres modes de réalisation de la cale 6 et/ou du chariot 3 permettant un guidage en translation de la cale 6 sur le chariot 3, par exemple employant des patins ou un fourreau de guidage ou encore de faire modifier les surfaces d'appui du chariot sur le rail, sans sortir du cadre de la présente invention

On notera que la section de la tige 61, et plus particulièrement celle de la pièce 63, est asymétrique, la pente de la partie active 64 étant déterminée en fonction d'une poussée moyenne exercée par une roue d'un véhicule.

A l'extrémité avant de la tige 61 est prévue une jambe de force 65 équipée d'une semelle de glissement 66 destinée à venir au contact avec le sol de la zone de stationnement Z.

A l'extrémité arrière de la tige 61 est prévue une platine 67 s'étendant verticalement à partir de cette extrémité arrière, vers la zone de stationnement Z. La platine 67 fait ainsi face à la paroi latérale 32a du chariot 3. Un boîtier 7 est monté sur une surface avant de cette platine 67, faisant face à cette paroi latérale 32a, le boîtier 7 étant agencé au niveau d'une partie inférieure de la platine 67.

Ce boîtier 7 comporte deux doigts de verrouillage 71, s'étendant chacun vers l'avant selon l'axe Y en étant agencés de façon adjacente l'un par rapport à l'autre selon l'axe X. Chaque doigt de verrouillage 71 est solidaire d'un ressort (non représentés) en appui contre la surface avant de la platine 67. Ces doigts de verrouillage 71 se déplacent ainsi en translation vis-à-vis du chariot 3, concomitamment avec la cale 6. Ils forment chacun un organe de verrouillage complémentaire destiné à être inséré dans l'un des perçages 21 du rail 2 pour immobiliser le chariot 3 sur le rail 2.

On notera que la paroi 32a du chariot 3 est ainsi pourvue d'orifices 32c, faisant chacun face à l'un des doigts 71, de sorte que ce doigt 71 puisse traverser cette paroi 32a. On pourra prévoir, en variante, que la paroi 32a s'arrête au-dessus des doigts 71, les doigts 71 passant alors en-dessous de cette paroi 32a.

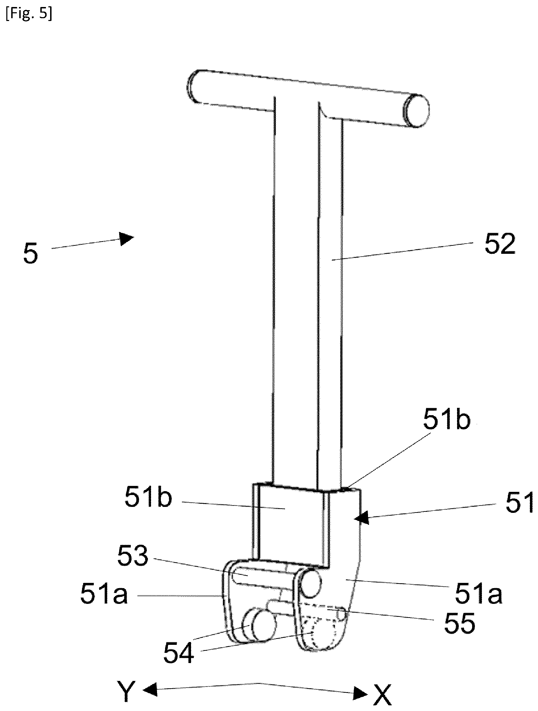

Afin de pouvoir manipuler le chariot 3 et la cale 6, et les déplacer respectivement selon les axes X et Y, la cale 6 est équipée d'une poignée 5, visible en [Fig. 5].

La poignée 5 comporte un socle 51, formé de deux parois latérales 51a définissant une partie inférieure et une partie supérieure du socle 51, la partie supérieure étant close par deux parois avant et arrière 51b. La partie supérieure définit ainsi un volume dans lequel est encastré une barre de manipulation 52 s'étendant vers le haut. On notera que la partie inférieure du socle 51 fait saillie vers l'avant par rapport à la partie supérieure.

Le socle 51 comprend un arbre 53 reliant les parois latérales 51a entre elles, au niveau d'un bord avant supérieure de la partie inférieure du socle 51. La platine 67 comporte un cylindre 68 soudé sur sa paroi avant, entre les parties inférieure et supérieure de cette platine 67, l'arbre 53 du socle 51 étant engagé dans ce cylindre 68.

La [Fig. 6] représente la poignée 5 ainsi montée sur la cale 6. On constate que la poignée 5 est montée pivotante sur la cale 6 autour d'un axe de rotation, parallèle à la direction X et définit par l'assemblage de l'arbre 53 du socle 51 et du cylindre 68.

Le socle 51 définit ainsi un passage entre l'arbre 53 et la paroi avant 51b, qui est traversé par la platine 67 de sorte que le boîtier 7 se retrouve au niveau de la partie inférieure du socle 51, entre les deux parois latérales 51a.

Lorsqu'on souhaite immobiliser le véhicule C sur la zone de stationnement Z, un opérateur déplace, à l'aide de la poignée 5, le chariot 3 sur le rail 2, le long de l'axe X, jusqu'à ce que la cale 6 soit positionnée à l'avant d'une roue R. Puis, il pousse, toujours à l'aide de la poignée 5, la cale 6 selon l'axe Y pour que sa partie active 64 vienne au voisinage de la roue R.

Le mouvement de la cale 6 entraine également le déplacement des doigts de verrouillage 71 au travers des orifices 32c puis leur insertion dans les perçages 21 du rail 2 en vis-à-vis desquels ces doigts ont été positionnés, via le déplacement du chariot 3 sur le rail 2. Le chariot 3 est alors immobilisé sur le rail 2 et la cale 6 adopte une configuration de blocage dans laquelle elle s'oppose, via la coopération mécanique entre les doigts 71 et les perçages 21, à un mouvement du véhicule C vers l'avant de la zone de stationnement Z.

On notera qu'en cas d'alignement imparfait des doigts de verrouillage 71 avec les perçages 21, les ressorts de ces doigts 71 permettent de les réaligner facilement, ce qui simplifie le travail de l'opérateur puisqu'il n'est plus nécessaire de chercher cet alignement précis.

Afin de faciliter le déplacement de la cale 6 depuis sa configuration de blocage vers une configuration dégagée, et le dégagement des doigts de verrouillage 71 depuis les perçages 21, le socle 51 comporte deux cylindres 54 soudés sur des surfaces intérieures des parois latérales 51a, au niveau d'un bord inférieur de la partie inférieure du socle 51. Le socle 51 comporte également une tige 55 reliant les parois latérales 51a en étant positionnée à l'arrière de la partie inférieure de la platine 67. Ces cylindres 54 forment des organes de dégagement de la cale et la tige 55 forme un organe de blocage de la poignée 5.

De façon complémentaire, le chariot 3 comporte deux fers 35, agencés de part et d'autre des orifices 32c en étant soudés sur la paroi latérale 32a pour s'étendre selon la direction Y vers l'arrière du chariot 3.

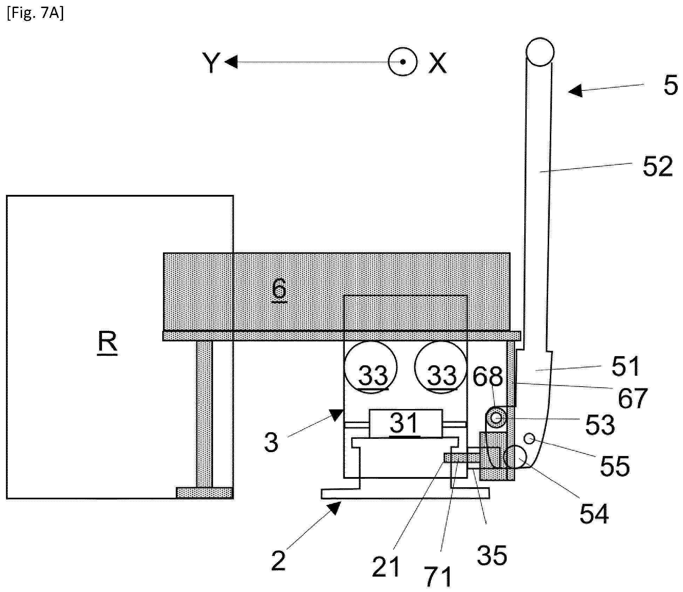

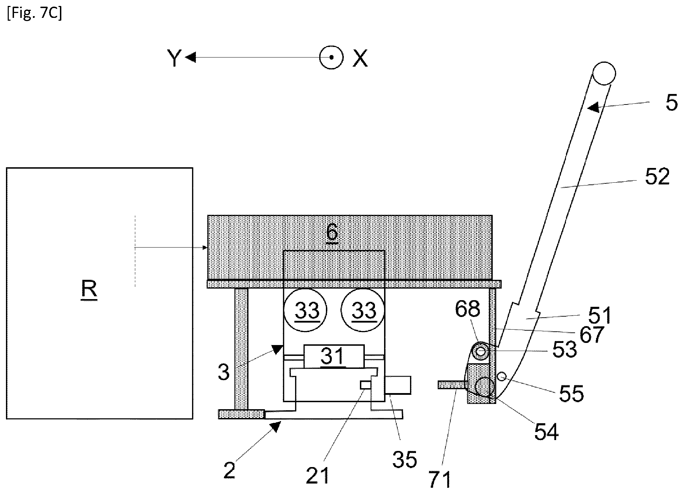

En liaison avec les [Fig. 7A] à [Fig. 7C], on va désormais décrire une cinématique de dégagement de la cale 6 depuis sa configuration de blocage, montré en [Fig. 7A], vers une configuration dégagée, montrée en [Fig. 7C]. Dans ces [Fig. 7A] à [Fig. 7C], tous les composants de la cale 6 sont représentés en gris.

Il est à noter que lors des opérations de transbordement, la remorque est susceptible de subir des mouvements. C'est notamment le cas lorsqu'un chariot élévateur pénètre dans la remorque et y circule. Un freinage brusque de ce chariot peut ainsi entrainer un déplacement de la caisse du véhicule qui plaque alors la roue du véhicule sur la cale. Dans ce cas, il peut être observé un coincement ou un blocage des doigts de verrouillage 71 dans les perçages 21 du fait de l'effort de la roue sur la cale.

Afin de dégager la cale 6 de sa configuration de blocage comme montré en [Fig. 7A], l'opérateur pivote la poignée 5 en tirant la barre de manipulation 52 vers lui. Le socle 51 se déplace ainsi vers le chariot 3 de sorte que les cylindres 54 viennent en appui contre les fers 35. La poignée 5 devient ainsi un levier permettant à l'opérateur d'amplifier sa force, le bras de levier étant ainsi formé par la totalité de la poignée 5, le point d'appui étant situé à l'opposé du point de manipulation de la barre 52.

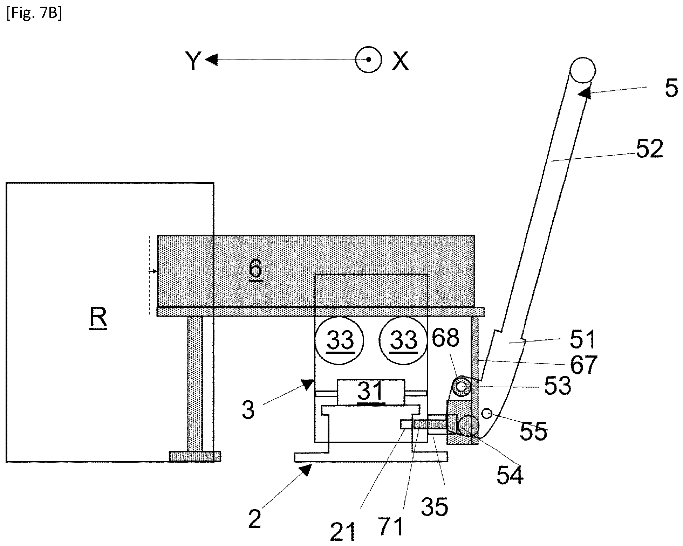

S'il poursuit la traction de la barre de manipulation 52 vers lui, son effort s'exerce alors selon la direction Y vers l'arrière, ce qui permet de déplacer la cale 6 et de dégager les doigts de verrouillage 71 des perçages 21, comme montré en [Fig. 7B]. On notera que l'effet de levier permet ce dégagement avec un effort minime, même en cas de coincement ou de blocage des doigts de verrouillage 71 dans les perçages 21 du fait d'un effort trop important exercé par la roue R sur la cale 6.

Une fois les doigts de verrouillage 71 dégagés, l'opérateur peut poursuivre la traction de la barre de manipulation 52 vers lui. La poignée 5 continue ainsi à pivoter jusqu'à ce que la tige 55 vienne au contact de la partie inférieure de la platine 67. La rotation de la poignée 5 est alors stoppée par ce contact, et l'effort de l'opérateur se traduit alors par une simple translation de la cale 6 vers l'arrière jusqu'à ce qu'elle atteigne sa configuration dégagée, telle que montré en [Fig. 7C].

Dans une variante non représentée de l'invention, on pourra prévoir, à la place de la tige 55 ou de façon cumulative, que la platine 67 soit montée sur la base plate 62 au moyen d'une ou plusieurs vis solidaires de la platine 67 et insérées dans un ou plusieurs trous oblongs formés dans cette base plate 62. Ce ou ces trous oblongs s'étendent selon la direction Y.

La platine 67 peut ainsi se déplacer légèrement, selon l'axe Y, vis-à-vis de la base plate 62 et donc du reste de la cale 6. Dans cette variante, le fonctionnement des [Fig. 7A] et [Fig. 7B] reste identique, l'ensemble barre de manipulation 52 - arbre 53 - cylindres 54 définissant toujours un levier permettant de dégager les doigts de verrouillage 71. En revanche, au regard de la [Fig. 7B], seule la platine 67 subit un décalage selon la direction Y vers l'arrière, sa ou ses vis se déplaçant dans le ou les trous oblongs de la base plate 62 jusqu'à venir en contact avec un bord de ce ou ces trous. De nouveau, la rotation de la poignée 5 est stoppée par ce contact, et l'intégralité de la cale 6 peut alors être translatée par l'opérateur dans la direction Y vers l'arrière jusqu'à ce qu'elle atteigne sa configuration dégagée, comme en [Fig. 7C].

On notera que dans l'exemple décrit, sans que cela soit limitatif, la configuration dégagée est une configuration dans laquelle la semelle de glissement 66 est en butée contre le rail de guidage 2. Aucune zone de la cale 6, et en particulier la partie active 64 de la tige 61, n'est alors positionnée en vis-à-vis de la bande de roulement de la roue R, de sorte que le véhicule C peut alors sortir de la zone de stationnement Z.

Le chariot 3 comporte un dispositif électromécanique de verrouillage, sous la forme d'un électroaimant 81 équipé d'un doigt de verrouillage mobile pouvant emprunter, sous l'action de l'électroaimant, une position déployée et une position escamotée. L'électroaimant 81 est supporté par la paroi avant 34a du chariot 3 pour être positionné au-dessus de la base plate 62 de la tige 61, du côté de la partie active 64. Cette base plate 62 est métallique et comporte un orifice 82 disposé de sorte que, lorsque la cale 6 est dans sa configuration de blocage, il vienne en vis-à-vis de l'électroaimant 81.

La pièce 63 de la cale 6 comporte également, du côté opposé à sa partie active, deux orifices (non représentés) et le chariot 3 comporte également deux détecteurs 83, par exemple de type inductif, supportés par la paroi arrière 34b et chacun apte à détecter la présence de l'un des orifices de la pièce 63 devant eux. L'un de ces orifices est avantageusement positionné sur la pièce 63 de sorte à venir en vis-à-vis de l'un des détecteurs 83 lorsque la cale 6 est dans sa configuration de blocage tandis que l'autre de ces orifices est avantageusement positionné sur la pièce 63 de sorte à venir en vis-à-vis de l'autre des détecteurs 83 lorsque la cale 6 est dans sa configuration libérée.

Enfin, le système 1 comporte une unité de contrôle (non représenté), distante du chariot 3 et du rail 2, apte à recevoir, de la part des détecteurs 83, une information relative à la configuration empruntée par la cale 6, à savoir si la cale 6 est ou non dans sa configuration de blocage, et agencée pour contrôler l'électroaimant 81 en fonction de ladite information. Plus précisément, lorsque la cale 6 a été poussée dans la direction Y vers sa configuration de blocage, les détecteurs 83 détectent la présence des orifices de la pièce 63 devant eux. Ils en informent l'unité de contrôle, laquelle contrôle alors l'électroaimant 81 pour que son doigt de verrouillage adopte la position déployée et s'insère ainsi dans l'orifice 82 de la base plate 62. Il est alors impossible de déplacer manuellement la cale 6, de sorte que les opérations de transbordement peuvent se dérouler en toute sécurité. Une fois ces opérations terminées, une interface manuelle au niveau de l'unité de contrôle permet de déclencher le retrait du doigt de verrouillage de l'électroaimant 81 vers sa configuration escamotée. Il est alors possible de déplacer manuellement la cale 6 vers sa configuration dégagée pour libérer le véhicule.

On notera que les différents éléments électroniques supportés par le chariot 3, à savoir l'électroaimant 81 et les détecteurs 83, sont reliés par un faisceau de câbles 84 à l'unité de contrôle.

Ce câble comporte une première section 84a spiralée, s'étendant à partir de l'unité de contrôle dans le rail de guidage 2, jusqu'à une extrémité ouverte du rail. Le câble passe ainsi par une poulie 85 agencée à cette extrémité ouverte et une deuxième section 84b s'étend ainsi depuis cette poulie 85, à l'extérieur du rail de guidage 2, jusqu'au chariot 3, pour être ensuite relié aux éléments 81 et 83.

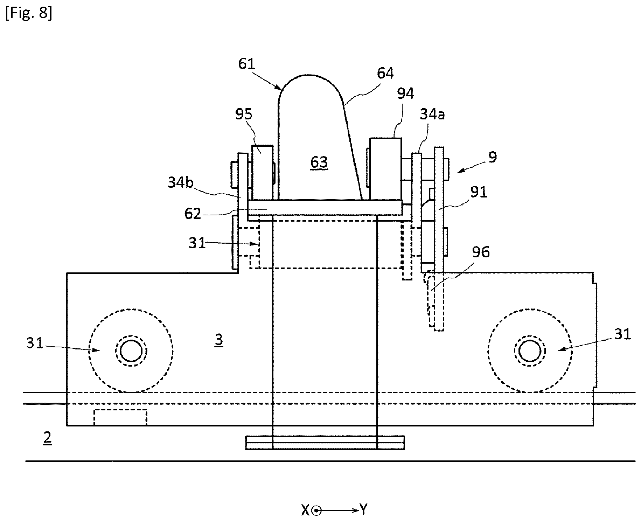

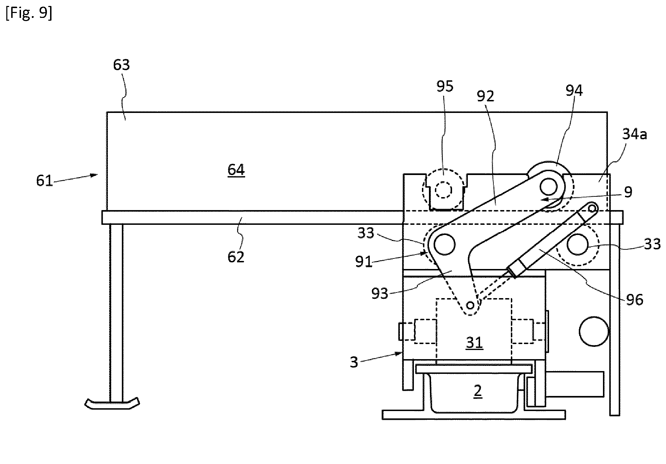

En lien avec les [Fig. 2], [Fig. 3], [Fig. 8] et [Fig. 9], on va maintenant décrire d'autres caractéristiques du système d'immobilisation 1. La [Fig. 8] représentent une vue de face du système 1, c'est à-dire selon la direction X tandis que la [Fig. 9] représente une vue de côté du système 1. On notera que certaines des caractéristiques décrites précédemment n'ont pas été représentés sur ces figures, à des fins de concision.

Le chariot 3 supporte un système d'amortissement et de rappel 9 destiné à autoriser une rotation de la cale 6 autour d'un axe de rotation parallèle à la direction X et passant par le galet de roulement avant 33, puis à rappeler la cale 6 vers sa position d'équilibre dans laquelle elle est en appui sur les deux galets de roulement 33.

Ce système 9 comporte une manivelle 91 montée mobile en rotation sur la paroi avant 34a du chariot 3 et pourvu d'une première partie 92 et d'une deuxième partie 93, s'étendant à partir de son centre de rotation. L'axe de rotation de la manivelle 91 est sensiblement identique à celui de l'axe de rotation du galet de roulement avant 33.

Un galet de roulement 94 est relié à une extrémité de la première partie 92, laquelle s'étend de sorte que le galet de roulement 94 soit en appui sur la base plate 62 de la tige, du côté de sa partie active 64. Lorsque la cale 6 se déplace le long de la direction Y, le galet 94 roule ainsi sur cette base plate 62, participant par conséquent au guidage de la translation de la cale 6. On notera que le chariot comporte un autre galet de roulement 95, monté directement sur la paroi arrière 34b et également en appui sur la base plate 62, de l'autre côté de la pièce 63 et au-dessus de l'axe de rotation du galet de roulement avant 33.

Un ressort à gaz 96 est relié à l'extrémité de la deuxième partie 93 et au chariot 3. Plus précisément, le cylindre du ressort 96 est monté mobile en rotation sur la paroi avant 34a et sa tige est reliée à l'extrémité de la deuxième partie 93 de la manivelle 91.

On comprend ainsi que, lorsque la roue R du véhicule C exerce une pression importante sur la cale 6, la cale 6 peut pivoter autour d'un axe de rotation passant au niveau du galet de roulement avant 33. Lors de ce pivotement, l'avant de la cale 6 reste plaqué sur le galet de roulement avant 33, grâce au galet 95 tandis que l'arrière de la cale 6 s'élève vis-à-vis du galet de roulement arrière 33, entrainant le galet de roulement 94 avec elle.

La manivelle 91 pivote ainsi autour de son axe de rotation, et vient alors appuyer sur la tige du ressort 96 qui se comprime. On amortit ainsi l'effort exercé par la roue R sur la cale 6, sans que cet effort ne soit repris par une partie fixe du système 1, comme le chariot 3 ou le rail 2, ce qui pourrait le détériorer.

Une fois la pression de la roue R relâchée, par exemple une fois que le conducteur du véhicule C arrête de reculer contre la cale 6, le ressort 96 se détend et entraine une rotation inverse de la manivelle 91 qui vient plaquer le galet de roulement 94 sur la base plate 62 et donc ramener la cale 6 en appui sur les deux galets de roulement avant et arrière 33 du chariot 3.

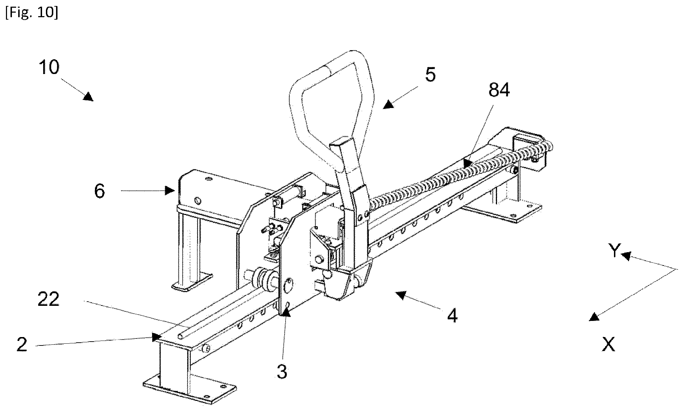

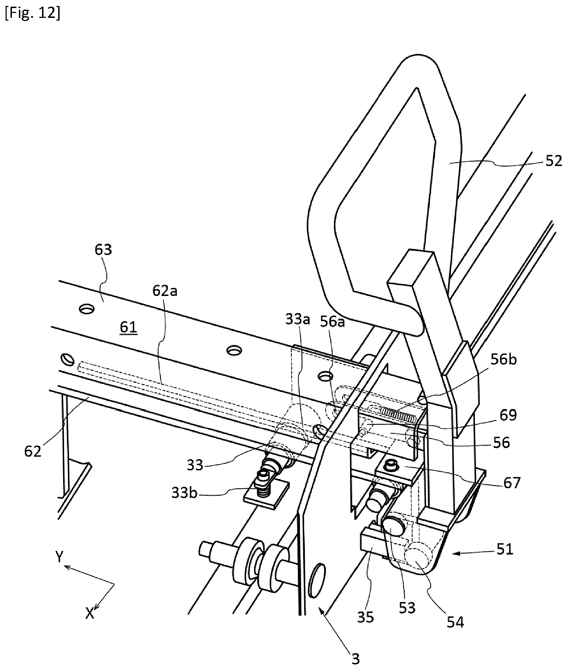

On a représenté aux [Fig. 10] à [Fig. 12] des vues en perspective d'un système d'immobilisation 10 selon un autre exemple de réalisation de l'invention. De façon similaire au premier mode de réalisation, le système d'immobilisation 10 comporte un rail de guidage 2, supporté par la zone de stationnement sur lequel circule le véhicule, ainsi qu'un chariot 3 monté mobile en translation sur le rail 2 et équipé d'un dispositif d'immobilisation 4. Dans la suite de la description de ce deuxième mode de réalisation, seules les différences avec le premier mode seront décrites, les éléments restants étant identiques d'un mode à l'autre.

Dans ce mode de réalisation, le rail de guidage 2 comporte un guide 22 s'étendant le long du rail de guidage sur sa surface supérieure. Les galets de roulement 31 du chariot 3 présentent chacune une gorge 31a dans laquelle est engagé le guide 22. Les galets 31 sont donc en appui sur la surface supérieure du rail 2 tout en étant guidé transversalement par la gorge 31a.

Un même guide 62a est prévu sous la base plate 62 de la cale 6. Le chariot 3 comporte deux galets de roulement supérieurs 33, venant en appui sur une surface supérieure de la tige 61 de la cale 6, et deux galets de roulement inférieurs 33, venant en appui sur une surface inférieure de la base plate 62 de la cale 6. Les galets inférieurs 33 présentent chacun une gorge 33a dans laquelle est engagé le guide 62a, afin de guider transversalement la cale 6 lors de sa translation selon la direction Y.

L'un des galets inférieurs 33 est par ailleurs monté sur le chariot 3 via deux ressorts de compression 33b, agencés de part et d'autre de ce galet 33. Ces ressorts 33b forment ainsi un système d'amortissement de la cale 6, autorisant une rotation de la cale 6 autour d'un axe parallèle à la direction X.

De façon similaire au fonctionnement du système d'amortissement 9 décrit aux [Fig. 8] et [Fig. 9], lorsque la roue R du véhicule C exerce une pression importante sur la cale 6, la cale 6 peut pivoter autour de son axe de rotation, les ressorts 33b se comprimant. On amortit ainsi l'effort exercé par la roue R sur la cale 6, sans que cet effort ne soit repris par une partie fixe du système 1, comme le chariot 3 ou le rail 2, ce qui pourrait le détériorer. Une fois la pression de la roue R relâchée, par exemple une fois que le conducteur du véhicule C arrête de reculer contre la cale 6, les ressorts 33b se détendent et entrainent une rotation inverse de la cale 6 pour la ramener en appui sur les galets de roulement 33.

La poignée 5 comporte une pièce de liaison 56, montée sur la poignée par une liaison pivot selon un axe de rotation parallèle à la direction X, au-dessus du socle 1. Cette pièce de liaison 56 est formée par deux plaques dans lesquelles sont formés des trous oblongs 56a. La pièce de liaison 56 est engagée à l'intérieur de la pièce 63 de la tige 61.

Un axe 69, solidaire de la pièce 63 et s'étendant selon la direction X, est engagé dans ces trous oblongs 56a.

Un ressort 56b est fixé dans la pièce de liaison 56, en étant fixé d'une part à la liaison pivot entre la pièce de liaison 56 et la poignée 5 et d'autre part à l'axe 69.

La pièce de liaison 56 forme ainsi à la fois un organe de blocage permettant de changer le point de traction de la cale 6 lors des opérations de dégagement de cette cale, et un dispositif de rappel de la poignée 5 vers une position de repos opposée à sa position de manipulation permettant de déplacer la cale 6 vers sa configuration dégagée.

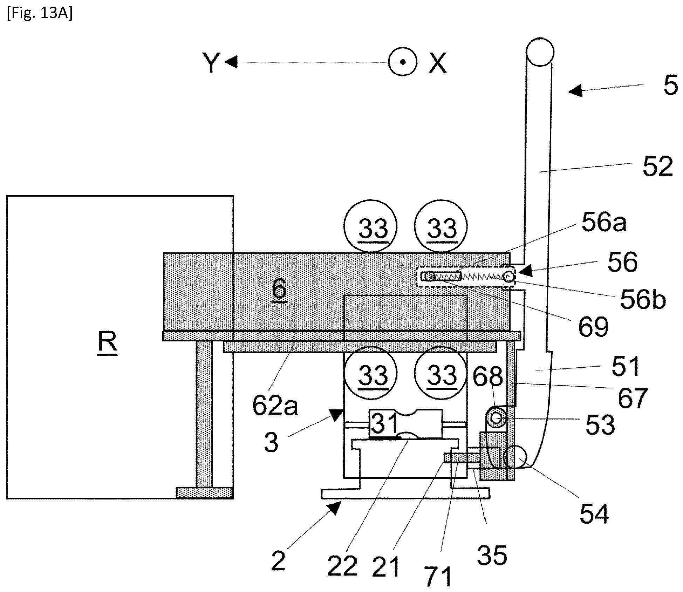

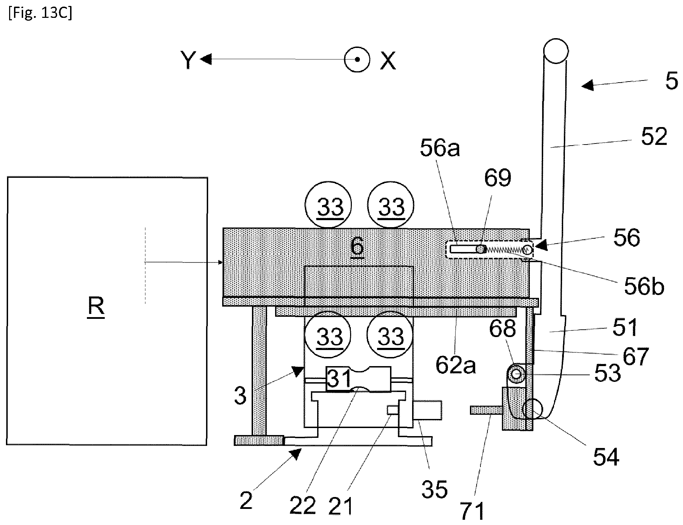

En lien avec les [Fig. 13A] à [Fig. 13C], on va désormais décrire une cinématique de dégagement de la cale 6 depuis sa configuration de blocage, montré en [Fig. 13A], vers une configuration dégagée, montrée en [Fig. 13C].

Afin de dégager la cale 6 de sa configuration de blocage comme montré en [Fig. 13A], l'opérateur pivote la poignée 5 en tirant la barre de manipulation 52 vers lui. Le socle 51 se déplace ainsi vers le chariot 3 de sorte que les cylindres 54 viennent en appui contre les fers 35. La poignée 5 devient ainsi un levier permettant à l'opérateur d'amplifier sa force, le bras de levier étant ainsi formé par la totalité de la poignée 5, le point d'appui étant situé à l'opposé du point de manipulation de la barre 52.

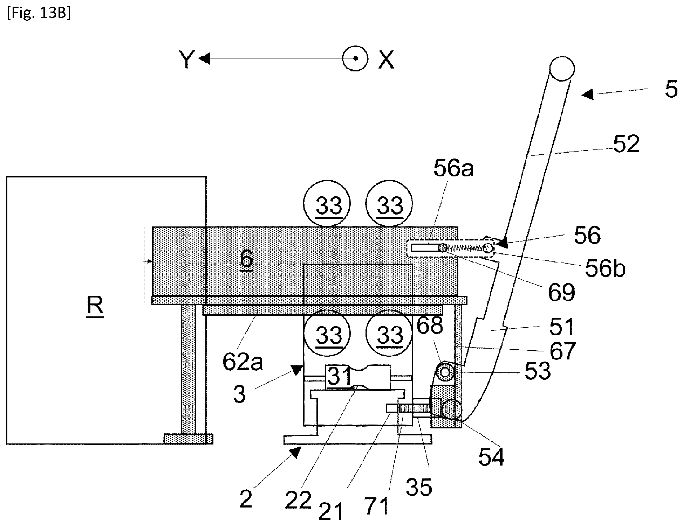

S'il poursuit la traction de la barre de manipulation 52 vers lui, son effort s'exerce alors selon la direction Y vers l'arrière, ce qui permet de déplacer la cale 6 et de dégager les doigts de verrouillage 71 des perçages 21, comme montré en [Fig. 13B]. On notera que l'effet de levier permet ce dégagement avec un effort minime, même en cas de coincement ou de blocage des doigts de verrouillage 71 dans les perçages 21 du fait d'un effort trop important exercé par la roue R sur la cale 6.

Concomitamment, l'axe 69 est entrainé par le déplacement de la cale 6 et se déplace dans les trous oblongs 56a de la pièce de liaison 56 jusqu'à venir en butée contre les bords de ces trous oblongs. Le ressort 56b est alors comprimé.

Une fois les doigts de verrouillage 71 dégagés, l'opérateur peut poursuivre la traction de la barre de manipulation 52 vers lui. La rotation de la poignée 5 est stoppée par le contact entre l'axe 69 et les bords des trous oblongs 56a. L'effort de l'opérateur se traduit alors par une simple translation de la cale 6 vers l'arrière, le point de traction de la cale 6 s'exerçant alors principalement dans l'axe de la tige 61, et non au niveau du contact entre l'arbre 53 et du cylindre 68. La cale 6 peut alors atteindre sa configuration dégagée, telle que montré en [Fig. 13C].

Lorsque l'opérateur relâche la poignée 5, le ressort 56b se détend et rappelle alors la poignée 5 contre le chariot 3.

On notera que, dans le mode de réalisation des [Fig. 10] à [Fig. 12], l'électroaimant 81 est positionné horizontalement, selon l'axe X, et l'orifice 82 destiné à recevoir le doigt de verrouillage mobile de l'électroaimant est formé dans une paroi verticale de la pièce 63.

Par ailleurs, et quel que soit le mode de réalisation considéré, l'électroaimant 81 pourra être remplacé par un moteur linéaire sans sortir du cadre de la présente invention.

Enfin, on notera que le câble 84 s'étend totalement en dehors du rail de guidage 2.

La description qui précède permet de comprendre que, grâce à l'invention et en particulier grâce à une poignée montée mobile sur une cale et munie d'organe de dégagement destiné à venir au contact d'une butée fixe lors du déplacement de la poignée, il est possible de dégager, avec un effort minime, un organe de verrouillage d'un chariot d'un système d'immobilisation depuis l'élément de verrouillage d'un rail de guidage avec lequel il coopère. Dès lors, il est possible de déplacer la cale vers sa configuration libérée même en cas d'un effort important exercé par la roue du véhicule immobilisé sur cette cale qui aurait provoqué un coincement de l'organe de verrouillage.

## Revendications

1. Système d'immobilisation manuel (1) d'un véhicule routier (C) sur une zone de stationnement (Z) d'un quai de transbordement (Q), comprenant :
a. un rail de guidage (2),
b. un chariot (3) monté mobile en translation sur le rail de guidage ;
c. un dispositif d'immobilisation (4) comprenant une cale (6) montée mobile en translation sur le chariot selon une direction (Y) transversale au rail de guidage, et une poignée de manœuvre (5) reliée à la cale, la cale étant apte à emprunter, sous l'effet d'une manipulation de la poignée de manœuvre, une configuration de blocage et une configuration dégagée ;
**dans lequel** le rail de guidage comporte une pluralité d'éléments de verrouillage (21) agencés le long du rail de guidage et la cale comporte au moins un organe de verrouillage complémentaire (71) destiné à venir, par translation du chariot sur le rail de guidage, en vis-à-vis d'au moins l'un des éléments de verrouillage **et dans lequel** la cale est agencée de sorte que, lorsqu'elle emprunte la configuration de blocage, l'organe de verrouillage complémentaire coopère avec ledit au moins un élément de verrouillage en vis-à-vis pour immobiliser le chariot sur le rail ;
**caractérisé en ce qu'**il comporte une butée (35) fixe vis-à-vis du dispositif d'immobilisation, **en ce que** la poignée de manœuvre est montée mobile sur la cale, **et en ce que** la poignée comporte au moins un organe de dégagement (54) agencé pour venir au contact de la butée lorsque la poignée est manipulée pour déplacer la cale vers sa configuration dégagée.

2. Système d'immobilisation manuel (1) selon l'une des revendications précédentes, **caractérisé en ce que** le chariot (3) comporte ladite butée fixe (35) , **en ce que** la poignée (5) comporte un socle (51) via lequel elle est montée pivotante sur la cale (6) **et en ce que** l'organe de dégagement (54) est agencé sur ce socle en-dessous de l'axe de rotation de la poignée sur la cale.

3. Système d'immobilisation manuel (1) selon la revendication précédente, **dans lequel** la cale (6) comporte une tige (61) pourvue, à son extrémité arrière, d'une platine (67) sur laquelle est monté l'organe de verrouillage complémentaire (71), le socle (51) de la poignée (5) étant montée pivotant sur cette platine.

4. Système d'immobilisation manuel (1) selon l'une des revendications précédentes, **caractérisé en ce que** la poignée (5) et/ou la platine (67) comporte un organe de blocage (55) agencé pour venir au contact d'une partie de la cale (6) lorsque la poignée est manipulée pour déplacer la cale vers sa configuration dégagée.

5. Système d'immobilisation manuel (1) selon la revendication précédente, **caractérisé en ce que** l'organe de blocage (55) comporte au moins une pièce de liaison (56) montée pivotante sur la poignée (5), ladite pièce de liaison comportant un trou oblong (56a) dans lequel est agencé un axe (69) solidaire de la cale (6).

6. Système d'immobilisation manuel (1) selon l'une des revendications précédentes, **dans lequel** l'organe de verrouillage complémentaire (71) comporte un doigt de verrouillage monté sur un ressort.

7. Système d'immobilisation manuel (1) selon l'une des revendications précédentes, **caractérisé en ce qu'**il comporte un système d'amortissement et de rappel (9) comprenant un organe d'appui (94) monté mobile sur le chariot (3) via un dispositif amortisseur (96), l'organe d'appui étant apte à emprunter une position au repos dans laquelle il est en appui sur la cale (6) en exerçant une force sur la cale orientée vers la zone de stationnement (Z), **et en ce que** le dispositif d'amortissement est agencé pour rappeler l'organe d'appui vers sa position au repos.

8. Système d'immobilisation manuel (1) selon la revendication précédente, **dans lequel** le dispositif amortisseur (96) comporte une manivelle (91) montée mobile en rotation sur le chariot (3), **dans lequel** l'organe d'appui (94) est relié à une première extrémité (92) de la manivelle et **dans lequel** la deuxième extrémité (93) de la manivelle est reliée, via un ressort (96), au chariot.

9. Système d'immobilisation manuel (1) selon la revendication précédente, **dans lequel** le chariot (3) comporte au moins un galet de roulement avant (94) et un galet de roulement arrière (95) sur lesquels est disposée la cale (6) et **dans lequel** la manivelle (91) est montée mobile en rotation sur le chariot au niveau de l'axe de rotation du galet de roulement avant.

10. Système d'immobilisation manuel (1) selon l'une des revendications précédentes, **dans lequel** la cale (6) est montée coulissante sur le chariot (3) et dans lequel le chariot est équipé d'un ou plusieurs organes de guidage (33a) de la cale (6), et **dans lequel** au moins l'un desdits organes de guidage comporte un système d'amortissement et de rappel (33b).

11. Système d'immobilisation manuel (1) selon l'une des revendications précédentes, **caractérisé en ce qu'**il comporte un dispositif de rappel (56b) de la poignée de manœuvre (5) vers une position de repos opposée à la position de manipulation de la poignée de manœuvre permettant de déplacer la cale (6) vers sa configuration dégagée.

12. Système d'immobilisation manuel (1) selon l'une des revendications précédentes, **caractérisé en ce qu'**il comporte un dispositif électromécanique de verrouillage (81) de la cale (6) dans sa configuration de blocage.

13. Système d'immobilisation (1) selon la revendication précédente, **caractérisé en ce qu'**il comporte un câble d'alimentation (84) reliant le dispositif électromécanique de verrouillage (81) à une unité de contrôle, **en ce que** le câble comporte une première section (84a) s'étendant à partir de l'unité de contrôle dans le rail de guidage (2) jusqu'à une extrémité ouverte du rail, et une deuxième section (84b) s'étendant à l'extérieur du rail de guidage depuis ladite extrémité ouverte jusqu'au dispositif électromécanique de verrouillage, **et en ce que** le câble passe par une poulie (85) agencée au niveau de ladite extrémité ouverte.

## Patentansprüche

1. Manuelles Wegfahrsperrsystem (1) für ein Straßenfahrzeug (C) auf einer Parkzone (Z) einer Laderampe (Q), umfassend:
a. eine Führungsschiene (2),
b. einen Schlitten (3), der translatorisch bewegbar an die Führungsschiene montiert ist;
c. eine Wegfahrsperrvorrichtung (4), umfassend einen Keil (6), der entlang einer Richtung (Y) quer zu der Führungsschiene translatorisch bewegbar an den Schlitten montiert ist, und einen Betätigungsgriff (5), der mit dem Keil verbunden ist, wobei der Keil geeignet ist, um unter der Einwirkung einer Bedienung des Betätigungsgriffs eine Sperrkonfiguration und eine freigegebene Konfiguration einzunehmen;
**wobei** die Führungsschiene eine Vielzahl von entlang der Führungsschiene angeordneten Verriegelungselementen (21) umfasst und der Keil mindestens ein komplementäres Verriegelungselement (71) umfasst, das dazu ausgelegt ist, durch Translation des Schlittens an der Führungsschiene in eine mindestens einem der Verriegelungselemente gegenüberliegende Lage zu kommen, **und wobei** der Keil so angeordnet ist, dass, wenn er die Sperrkonfiguration einnimmt, das komplementäre Verriegelungselement mit dem mindestens einen gegenüberliegenden Verriegelungselement zusammenwirkt, um den Schlitten an der Schiene zu arretieren;
**dadurch gekennzeichnet, dass** es einen Anschlag (35) umfasst, der gegenüber der Wegfahrsperrvorrichtung ortsfest ist, **dass** der Betätigungsgriff bewegbar an den Keil montiert ist, **und dass** der Griff mindestens ein Freigabeelement (54) umfasst, das so angeordnet ist, dass es mit dem Anschlag in Kontakt kommt, wenn der Griff betätigt wird, um den Keil in seine freigegebene Konfiguration zu bewegen.

2. Manuelles Wegfahrsperrsystem (1) nach einem der vorstehenden Ansprüche, **dadurch gekennzeichnet, dass** der Schlitten (3) den festen Anschlag (35) umfasst, **dass** der Griff (5) einen Sockel (51) umfasst, über den er schwenkbar an den Keil (6) montiert ist, **und dass** das Freigabeelement (54) an diesem Sockel unterhalb der Drehachse des Griffs an dem Keil angeordnet ist.

3. Manuelles Wegfahrsperrsystem (1) nach dem vorstehenden Anspruch, **wobei** der Keil (6) einen Schaft (61) umfasst, der an seinem hinteren Ende mit einer Platte (67) versehen ist, an die das komplementäre Verriegelungselement (71) montiert ist, wobei der Sockel (51) des Griffs (5) schwenkbar an diese Platte montiert ist.

4. Manuelles Wegfahrsperrsystem (1) nach einem der vorstehenden Ansprüche, **dadurch gekennzeichnet, dass** der Griff (5) und/oder die Platte (67) ein Sperrelement (55) umfasst, das so angeordnet ist, dass es mit einem Teil des Keils (6) in Kontakt kommt, wenn der Griff betätigt wird, um den Keil in seine freigegebene Konfiguration zu bewegen.

5. Manuelles Wegfahrsperrsystem (1) nach dem vorstehenden Anspruch, **dadurch gekennzeichnet, dass** das Sperrelement (55) mindestens ein Verbindungsteil (56) umfasst, das schwenkbar an dem Griff (5) montiert ist, wobei das Verbindungsteil ein Langloch (56a) umfasst, in dem eine fest mit dem Keil (6) verbundene Achse (69) angeordnet ist.

6. Manuelles Wegfahrsperrsystem (1) nach einem der vorstehenden Ansprüche, **wobei** das komplementäre Verriegelungselement (71) einen an eine Feder montierten Verriegelungsfinger umfasst.

7. Manuelles Wegfahrsperrsystem (1) nach einem der vorstehenden Ansprüche, **dadurch gekennzeichnet, dass** es ein Dämpfungs- und Rückstellsystem (9) umfasst, das ein Anlageelement (94) umfasst, das über eine Dämpfungsvorrichtung (96) bewegbar an dem Schlitten (3) montiert ist, wobei das Anlageelement geeignet ist, eine Ruhestellung einzunehmen, in der es an dem Keil (6) anliegt, wobei es auf den Keil eine in Richtung der Parkzone (Z) gerichtete Kraft ausübt, **und dass** die Dämpfungsvorrichtung angeordnet ist, um das Anlageelement in seine Ruhestellung zurückzustellen.

8. Manuelles Wegfahrsperrsystem (1) nach dem vorstehenden Anspruch, **wobei** die Dämpfungsvorrichtung (96) eine Kurbel (91) umfasst, die drehbeweglich an den Schlitten (3) montiert ist, **wobei** das Anlageelement (94) mit einem ersten Ende (92) der Kurbel verbunden ist, und **wobei** das zweite Ende (93) der Kurbel über eine Feder (96) mit dem Schlitten verbunden ist.

9. Manuelles Wegfahrsperrsystem (1) nach dem vorstehenden Anspruch, **wobei** der Schlitten (3) mindestens eine vordere Laufrolle (94) und eine hintere Laufrolle (95) umfasst, an denen der Keil (6) angeordnet ist, und **wobei** die Kurbel (91) auf Höhe der Drehachse der vorderen Laufrolle drehbeweglich an den Schlitten montiert ist.

10. Manuelles Wegfahrsperrsystem (1) nach einem der vorstehenden Ansprüche, **wobei** der Keil (6) verschiebbar an den Schlitten (3) montiert ist und wobei der Schlitten mit einem oder mehreren Führungselementen (33a) des Keils (6) versehen ist, und **wobei** mindestens eines der Führungselemente ein Dämpfungs- und Rückstellsystem (33b) umfasst.

11. Manuelles Wegfahrsperrsystem (1) nach einem der vorstehenden Ansprüche, **dadurch gekennzeichnet, dass** es eine Rückstellvorrichtung (56b) zur Rückstellung des Betätigungsgriffs (5) in eine Ruhestellung umfasst, die der Bedienstellung des Betätigungsgriffs entgegengesetzt ist, was ein Bewegen des Keils (6) in seine freigegebene Konfiguration ermöglicht.

12. Manuelles Wegfahrsperrsystem (1) nach einem der vorstehenden Ansprüche, **dadurch gekennzeichnet, dass** es eine elektromechanische Verriegelungsvorrichtung (81) zur Verriegelung des Keils (6) in seiner Sperrkonfiguration umfasst.

13. Wegfahrsperrsystem (1) nach dem vorstehenden Anspruch,
**dadurch gekennzeichnet, dass** es ein Versorgungskabel (84) umfasst, das die elektromechanische Verriegelungsvorrichtung (81) mit einer Steuereinheit verbindet, **dass** das Kabel einen ersten Abschnitt (84a), der sich von der Steuereinheit in der Führungsschiene (2) bis zu einem offenen Ende der Schiene erstreckt, und einen zweiten Abschnitt (84b), der sich außerhalb der Führungsschiene von dem offenen Ende bis zu der elektromechanischen Verriegelungsvorrichtung erstreckt, umfasst, **und dass** das Kabel über eine Umlenkrolle (85) verläuft, die an dem offenen Ende angeordnet ist.

## Claims

1. A system (1) for manually immobilizing a road vehicle (C) on a parking area (Z) of a transshipment dock (Q), comprising:
a. a guiding rail (2),
b. a carriage (3) mounted on the guiding rail so as to be translationally movable;
c. an immobilizing device (4) comprising a chock (6) mounted on the carriage so as to be translationally movable in a direction (Y) transverse to the guiding rail, and an operating handle (5) connected to the chock, the chock being able to adopt, when the operating handle is manipulated, a blocking configuration and a released configuration;
the guiding rail comprising a plurality of locking elements (21) arranged along the guiding rail and the chock comprising at least one complementary locking member (71) intended to arrive, by translation of the carriage on the guiding rail, opposite at least one of the locking elements and the chock being arranged so that, when it adopts the blocking configuration, the complementary locking member engages with said at least one opposite locking element to immobilize the carriage on the rail;
**characterized in that** it comprises a stop (35) that is fixed with respect to the immobilizing device, **in that** the operating handle is mounted movably on the chock, **and in that** the handle comprises at least one release member (54) arranged to come into contact with the stop when the handle is manipulated to move the chock toward its released configuration.

2. The manual immobilization system (1) according to any of the preceding claims, **characterized in that** the carriage (3) comprises said fixed stop (35), **in that** the handle (5) comprises a base (51) via which it is pivotably mounted on the chock (6) **and in that** the release member (54) is arranged on this base below the axis of rotation of the handle on the chock.

3. The manual immobilization system (1) according to the preceding claim, **wherein** the chock (6) comprises a rod (61) provided, at its rear end, with a plate (67) on which the complementary locking member (71) is mounted, the base (51) of the handle (5) being pivotably mounted on this plate.

4. The manual immobilization system (1) according to any of the preceding claims, **characterized in that** the handle (5) and/or the plate (67) comprises a blocking member (55) arranged to come into contact with part of the chock (6) when the handle is manipulated to move the chock toward its released configuration.

5. The manual immobilization system (1) according to the preceding claim, **characterized in that** the blocking member (55) comprises at least one connecting part (56) pivotably mounted on the handle (5), said connecting part comprising an oblong hole (56a) in which a pin (69) rigidly connected to the chock (6) is arranged.

6. The manual immobilization system (1) according to any of the preceding claims, **wherein** the complementary locking member (71) comprises a locking finger mounted on a spring.

7. The manual immobilization system (1) according to any of the preceding claims, **characterized in that** it comprises a damping and return system (9) comprising a support member (94) movably mounted on the carriage (3) via a damping device (96), the support member being able to adopt a rest position in which it bears against the chock (6) while exerting a force on the chock directed toward the parking area (Z), **and in that** the damping device is arranged to return the support member to its rest position.

8. The manual immobilization system (1) according to the preceding claim, **wherein** the damping device (96) comprises a crank (91) mounted rotatably on the carriage (3), **wherein** the support member (94) is connected to a first end (92) of the crank and **wherein** the second end (93) of the crank is connected, via a spring (96), to the carriage.

9. The manual immobilization system (1) according to the preceding claim, **wherein** the carriage (3) comprises at least one front roller (94) and one rear roller (95), on which the chock (6) is arranged, and **wherein** the crank (91) is rotatably mounted on the carriage in the region of the axis of rotation of the front roller.

10. The manual immobilization system (1) according to any of the preceding claims, **wherein** the chock (6) is slidably mounted on the carriage (3) and wherein the carriage is provided with one or more guide members (33a) for the chock (6), and **wherein** at least one of said guide members comprises a damping and return system (33b).

11. The manual immobilization system (1) according to any of the preceding claims, **characterized in that** it comprises a device (56b) for returning the operating handle (5) to a rest position opposite the manipulation position of the operating handle enabling the chock (6) to be moved to its released configuration.

12. The manual immobilization system (1) according to any of the preceding claims, **characterized in that** it comprises an electromechanical device (81) for locking the chock (6) in its blocking configuration.

13. The immobilization system (1) according to the preceding claim, **characterized in that** it comprises a power cable (84) connecting the electromechanical locking device (81) to a control unit, **in that** the cable comprises a first portion (84a) extending from the control unit in the guiding rail (2) to an open end of the rail, and a second portion (84b) extending outside the guiding rail from said open end to the electromechanical locking device, **and in that** the cable passes over a pulley (85) arranged at said open end.
